# EUROPÄISCHE PATENTSCHRIFT

(11) **EP 3 921 765 B1**
(45) Veröffentlichungstag und Bekanntmachung des Hinweises auf die Patenterteilung: **01.11.2023**
(21) Anmeldenummer: 20716690.1
(22) Anmeldetag: 07.02.2020
(51) Int. Cl.: G06K 7/10

(54) **ANTENNENBOX FÜR RFID-LESEGERATE INSBESONDERE FÜR TISCHANWENDUNGEN INSBESONDERE IM BEREICH DER MEDIZINTECHNIK UND RFID-LESEGERÄT MIT EINER SOLCHEN ANTENNENBOX**
ANTENNA BOX FOR RFID READERS, IN PARTICULAR FOR TABLE APPLICATIONS, IN PARTICULAR IN THE FIELD OF MEDICAL TECHNOLOGY, AND RFID READER HAVING SUCH AN ANTENNA BOX
BOÎTIER D'ANTENNE POUR LECTEURS RFID, EN PARTICULIER POUR DES APPLICATIONS DE TABLE, NOTAMMENT DANS LE DOMAINE DE LA TECHNOLOGIE MÉDICALE ET LECTEUR RFID COMPRENANT UN TEL BOÎTIER D'ANTENNE

(30) Priorität: 07.02.2019 DE 102019103097
(43) Veröffentlichungstag der Anmeldung: 15.12.2021
(73) Patentinhaber: Asanus Medizintechnik GmbH, 78579 Neuhausen ob Eck (DE)
(72) Erfinder: SCHORER, Armin, 78597 Irndorf (DE)
(74) Vertreter: Kreutzer, Ulrich
(86) Internationale Anmeldenummer: PCT/DE2020/100082
(87) Internationale Veröffentlichungsnummer: WO 2020/160733

(56) Entgegenhaltungen:
- EP-A2- 0 918 308
- US-A1- 2002 149 530
- US-A1- 2006 170 556

## Beschreibung

### TECHNISCHES GEBIET DER ERFINDUNG

Die Erfindung betrifft eine Antennenbox für RFID-Lesegeräte insbesondere für Tischanwendungen insbesondere im Bereich der Medizintechnik und ein RFID-Lesegerät mit einer solchen Antennenbox. Dabei sei betont, dass wenn hier der Kürze halber immer von RFID-Lesegeräten gesprochen wird, dieser Begriff als Oberbegriff für reine RFID-Lesegeräte, kombinierte Lese- und Schreibgeräte und reine RFID-Schreibgeräte dient, da - wie sich aus der folgenden Offenbarung für den Fachmann ergibt - die hier beschriebene technische Lösung zwar typischerweise zum Auslesen von auch als Funketiketten bezeichneten RFID-Tags verwendet wird, sich aber in gleicher Weise auch dazu eignet, Funketiketten gezielt zu beschreiben.

### HINTERGRUND DER ERFINDUNG

Aus unterschiedlichsten Gründen kann es wünschenswert sein, Objekte wie z.B. ein Werkzeug, Implantat, Bauteil, Schmuckstück, medizinisches Instrument etc. mit einem Funketikett zu versehen. So ist es z.B. im medizinischen Bereich aufgrund der stark gestiegenen Anforderungen an die Dokumentationspflicht bei Operationen extrem wichtig, genau dokumentieren zu können, welche medizinischen Instrumente bei einer bestimmten Operation eingesetzt wurden. Gerade auf diesem Gebiet bietet die RFID-Technologie große Möglichkeiten zur Erfassung der verwendeten Instrumente, Implantate und sonstigen medizinischen Gerätschaften, wenn diese mit hier allgemein und nicht-beschränkend als Funketiketten bezeichneten RFID-Tags, die in unterschiedlichster Bauart bekannt sind, markiert sind. Dabei erlauben es dann die z.B. von der Anmelderin vorgestellten Systeme und Verfahren, durch Auslesen von Funketiketten eine ganze Reihe von Informationen über den Operationsverlauf zu erfassen und insbesondere auch sicherzustellen, dass, was erstaunlich häufig vorkommt, keine Instrumente unbeabsichtigt im Patienten verbleiben.

Gerade bei der Markierung von in der Regel metallischen Objekten wie einem medizinischen Instrument stellt das gezielte Auslesen eines Funketiketts eine besondere Herausforderung dar, da zum einen das Objekt selbst die zum Auslesen des Funketiketts verwendeten elektromagnetischen Wellen abschirmen kann, und es zum anderen in der Ausleseumgebung wie z.B. in einem Operationssaal oder einer Sterilgutabteilung eines Krankenhauses, wo benutzte Instrumente gereinigt und steril verpackt werden, typischerweise nicht nur viele metallische Oberflächen, z.B. Edelstahltische, sondern auch viele mit Funketiketten markierte Objekte gibt, die sich gegenseitig beeinflussen.

RFID-Antennen im UHF-Bereich erzeugen typischerweise ein räumlich umfassendes elektromagnetisches Feld, um eine Vielzahl von Funketiketten gleichzeitig zu aktivieren und die in ihnen gespeicherten Informationen auszulesen. Dies ist beispielsweise dann sinnvoll, wenn ein Pulk frisch sterilisierter medizinischer Instrumente, die jeweils durch ein Funketikett mit einer individualisierten Kennung versehen sind, kontrolliert und inventarisiert werden soll. Dazu ist das eigentliche Lesegerät mit Hilfe einer geschirmten Hochfrequenzleitung mit einem Antennenmodul verbunden, welches eine für den jeweiligen Anwendungsfall optimierte planare Antennenstruktur besitzt. Bei solchen Antennenstrukturen handelt es sich in der Regel um einzelne Dipole oder Zusammenschaltungen von mehreren Dipolen oder strahlende resonante Flächenstrukturen, die als sogenannte Patch-Antennen bekannt sind und die sich in der Regel auf einem dielektrischen Trägersubstrat befinden. Als Trägersubstrat wird beispielsweise für den UHF-Frequenzbereich fast ausnahmslos FR-4 verwendet, ein Verbundwerkstoff aus Epoxidharz und Glasfasergewebe, welches zur Produktion von elektronischen Leiterplatten sehr gut geeignet ist und daher häufig verwendet wird.

Substrate aus FR-4 Material besitzen eine Permittivitätszahl, die etwa vier Mal größer ist als diejenige von Luft. Je nach realisierter Antennenstruktur ergibt sich ein vom Hersteller des Antennenmoduls vorgegebener Raumbereich, in dem sich die jeweiligen Funketiketten auslesen lassen.

Oft möchte man aber in Arbeitsumgebungen mit UHF-RFID-Lesetechnologien arbeiten, wo die Arbeitsflächen aus hygienischen Gründen zur Reinigung und Desinfektion praktisch ausnahmslos aus Edelstahl gefertigt sind, wobei diese dann für das vom Antennenmodul abgestrahlte elektromagnetische UHF-Feld wegen ihrer guten elektrischen Leitfähigkeit ähnlich wie stark reflektierende Spiegel oder räumlich verteilte Spiegelsegmente. Dadurch werden Interferenzen mit Hot-Spots oder Cold-Spots in dem vom Antennenmodul des Lesegerätes erzeugten Feldbereich bewirkt, wodurch es inhomogene Bereiche gibt, in denen beispielsweise die für die Aktivierung des Funketiketts erforderliche Feldenergie lokal nicht ausreicht, obwohl sich das markierte Instrument nahe beim Antennenmodul befindet. Es kommt zu unkontrollierten Reflexionen, wodurch ein und dasselbe Funketikett durch Spiegellungen an den metallenen Oberflächen laufzeitverzögerte sogenannte Mehrfachausbreitungssignale erzeugt, wodurch die Lesbarkeit der im Funketikett gespeicherten Daten erheblich erschwert oder gar unmöglich werden kann. Im akustischen Bereich ist dieser Effekt allseits bekannt. So kann oftmals die Lautsprecherdurchsage in Bahnhöfen nicht verstanden werden, weil durch die Überlagerung vielfacher Echos an den Wänden die Durchsage unverständlich ist. In ähnlicher Weise führt die metallene Umgebung z.B. in der Sterilgutversorgungsabteilung eines Krankenhauses, wo erfasst werden soll, welches Instrument in einen bestimmten Sterilgutbehälter gepackt wird, zu unkontrollierten oder unverständlichen UHF-RFID-Leseresultaten.

Auch aufgrund von engen Arbeits- und RFID-Erfassungsplatzverhältnissen für solche durch UHF-Felder zu aktivierende Funketiketten kommt es oft zu vom Anwender nicht gewollten unkontrollierten Funketikett-Lesungen, weil die vom etwas weiter entfernt stationierten Antennenmodul erzeugten elektromagnetischen Felder durch Interferenz bedingten Überlagerungen unerwartet weit in den benachbarten Arbeitsbereich hinein wirken. Die Folge ist, dass ein kontrolliertes Lesen der von im Funketikett abgespeicherten Informationen beispielsweise von metallischen Instrumenten aller Art im UHF-Nahfeldbereich wie zum Beispiel mit Funketiketten markierte chirurgische Instrumente oder andere mit UHF-Funketiketten markierte Gegenstände mittels der UHF-RFID-Technologie nicht fehlerfrei oder nur mit signifikanter Zeitverzögerung, bedingt durch gegebenenfalls erforderliche Mehrfachlesungen zur Fehlerelimination, möglich ist.

Der Effekt der Reflexion an metallisch leitenden Oberflächen bewirkt darüber hinaus insbesondere dann erhebliche Störungen beim Auslesen der jeweils abgespeicherten Daten, wenn mehrere Lesegeräte mit ihren jeweiligen Antennenmodulen gleichzeitig betrieben werden. Selbst bei hinreichend großer Entfernung der jeweiligen Antennenmodule voneinander kommt es aus den oben genannten Gründen durch Reflexionen zu Feldverzerrungen, Interferenzen, Hot-Spots und Cold-Spots usw. mit unkontrollierbaren Auswirkungen auf die zuverlässige Lesbarkeit der in den Funketiketten der markierten Objekte jeweils abgespeicherten Daten.

Daneben kommt es bei der Verwendung mehrerer Leseeinheiten wegen verzerrter überlappender elektromagnetischer UHF-Felder vor, dass ungewollt benachbarte Funketiketten aktiviert und ausgelesen werden, die sich gar nicht in dem Pulk der jeweils behandelten Werkzeuge befinden. Diese ungewollten Erfassungen von anderen benachbarten UHF-Funketiketten haben zur Folge, dass ein gezielt gesteuerter Prozess zur Erfassung von Produkten über eine in einen Computer eines Auswertesystems einprogrammierte Software dann nicht mehr problemlos und mit dem notwendigen Maß an Sicherheit für die erforderlichen Prozessabläufe möglich ist und der zusätzlichen Kontrolle bedarf.

Aus den vorgenannten Gründen ist ein praxisbezogener und ggf. automatisierter Einsatz von Funketiketten im UHF-Nahfeld-Lesebereich sowohl bei einer Präsenz von zahlreichen markierten metallischen Gegenständen als auch unter beengten Raumverhältnissen im metallischen Umfeld bislang nicht einfach.

Das Problem von Interferenzen aufgrund von Überlagerungen von abgestrahlten und an metallischen Oberflächen reflektierten monofrequenten Wellen tritt unter anderem bei der Aufbewahrung von mit Funketiketten markierten Werkzeugen in einem Werkzeugschrank, der allseitig mit Metall umschlossen ist und entweder eine metallene Tür zum Einbringen von Objekten besitzt oder durch einen Deckel allseitig metallisch geschlossen ist, auf. Zur zumindest partiellen Lösung dieses Problems schlägt die EP 3 200 119 B1 die Verwendung eines oder mehrerer motorbetriebener "Verwirbler" in Form jeweils zweier rechtwinklig angeordneter Metallplatten vor, die die Feldstruktur in den metallisch umschlossenen kontinuierlich ändern sollen, so dass die Orte der Interferenzen ständig variieren.

Dadurch soll erreicht werden, dass sich die Cold-Spots temporär verlagern und so alle Funketiketten gelesen werden können. Das Verfahren wird in ähnlicher Form in jedem modernen Mikrowellenofen angewendet, um eine gleichmäßige Erhitzung der Speisen zu gewährleisten, wobei sich der Verwirbler allerdings in der Nähe des felderzeugenden Magnetrons und nicht im Garraum befindet.

Eine ähnliche Problematik wird in der WO 2015/018902 A1 angesprochen, die eine komplexe automatisierte Lesevorrichtung vorschlägt wird, bei der jeweils ein Pulk von mit Funketiketten markierten medizinischen Instrumenten sicher gelesen und identifiziert werden soll. Die zu registrierenden Gegenstände werden in einer allseits geschlossenen Lesekammer deponiert, in der sich mehrere Metallplatten als Reflektoren befinden, welche die Aufgabe haben, die Feldstruktur in der beim Leseprozess allseits geschlossenen Lesekammer so zu beeinflussen, dass sich keine Fehler beim Auslesen der RFID-Informationen des Pulkes von markierten Instrumenten ergeben.

Sowohl die EP 3 200 119 B1 als auch die WO 2015/018902 A1 behandeln zwar das Interferenzproblem, jedoch erlaubt es keine der dort vorgestellten Lösungen, gezielt einzelne mit Funketiketten markierte Gegenstände schnell und einfach zu erfassen, die jeweiligen Funketiketten auszulesen und gegebenenfalls auch neu zu beschreiben.

Aus der US 2006/0170556 A1 ist eine komplexe RFID-Lesestraße bekannt, bei der mit Funketiketten markierte Objekte mittels eines Förderbandes durch eine tunnelartige Abschirmung, in deren Innerem ein entsprechendes Antennenmodul angeordnet ist, geführt werden. Eine solche Lesestraße eignet sich aufgrund ihrer Ausgestaltung nicht für Tischanwendungen insbesondere im Bereich der Medizintechnik, wo es darum geht, mittels eines kompakten, vorzugsweise transportablen und jedenfalls sterilisierbaren Geräts schnell mit Funketiketten markierte Instrumente zu erfassen, um zum Beispiel deren Verwendung bei einer Operation oder deren Einpacken in einen Sterilgutbehälter nach dem Sterilisieren zu dokumentieren oder kurz bestimmte Informationen über ein Instrument abzurufen, in dem im Operationssaal das Funketikett des Instruments ausgelesen wird.

Im Prinzip ähnliche RFID-Lesestraßen zur Verwendung zum Beispiel an Gepäckbändern von Flughäfen oder bei der Sortierung von Paketen lehren die EP 0 918 308 A2 und die US 9,830,486 B2. Auch diese Lesestraßen eignen sich nicht für Tischanwendungen der genannten Art.

Aus der US 7,959,751 B2 ist ein Antennenmodul zur Verbesserung des Auslesens von Funketiketten bekannt, bei der zwei Antennen verwendet werden, von denen eine mechanisch gedreht wird. Auch eine solche eher komplexe Antennenanordnung ist für Anwendungen in Operationssälen und Sterilgutabteilungen allenfalls bedingt geeignet.

### OFFENBARUNG DER ERFINDUNG

Der Erfindung liegt die Aufgabe zugrunde, eine Antennenbox für RFID-Lesegeräte anzugeben, die es bei besonders einfachem und kompakten Aufbau erlaubt, Funketiketten auch in Umgebungen mit hohem Anteil an Metallflächen wie z.B. Operationssälen und Sterilgutabteilungen und in Nachbarschaft zu vielen weiteren Funketiketten zuverlässig auszulesen und ggf. zu beschreiben. Bevorzugt soll die Antennenbox auch selbst auf metallischen Gegenständen wie z.B. einem Edelstahltisch betreibbar und so einfach und kompakt ausgebildet sein, dass sich leicht gereinigt und sterilisiert und mobil eingesetzt werden kann. Ferner soll ein RFID-Lesegerät mit analogen Eigenschaften angegeben werden, das eine entsprechende Antennenbox verwendet.

Die Aufgabe wird gelöst von einer Antennenbox mit den den Merkmalen des Anspruchs 1 bzw. einem RFID-Lesegerät mit den Merkmalen des Anspruchs 11. Vorteilhafte Ausgestaltungen und Weiterbildungen sind Gegenstand der Unteransprüche.

Die Erfindung beruht auf der Grundidee, eine zu wenigstens einer Seite, vorzugsweise zu zwei miteinander verbundenen Seiten zumindest partiell offene Antennenbox von etwa der Größe eines Schuhkartons zu verwenden, so dass Mitarbeiter mit Funketiketten markierte Objekte wie medizinische Instrumente einfach in die Box halten können, um das jeweilige Funketikett schnell und zuverlässig auch in metallischen Umgebungen und in Nachbarschaft zu weiteren Funketiketten auslesen zu können. Die Antennenbox besitzt wenigstens zwei einander gegenüberliegende metallisch leitende Seitenwände, die durch einen ebensolchen Boden miteinander verbunden sind und dadurch einen nach oben und vorzugsweise nach vorn (von einem vor der Box sitzenden Betrachter aus gesehen, wobei "nach vorn" dann die Betrachter zugewandte Vorderseite der Box meint) offenen Rechteckhohlleiter bilden, wobei am Boden der Box eine Antennenstruktur in Form eines Dipol oder eines Dipolarrays angeordnet und so ausgerichtet ist, dass sie im Betrieb in der Antennenbox einen H20-Wellentyp (durch Schaltungszwang) anregt. Dabei ist der seitliche Abstand der genannten Seitenwände etwa im Bereich von 10 cm bis 25 cm so gewählt, dass die mit Funketiketten markierten Objekte problemlos eingeführt werden können, aber die von der Antennenstruktur eingespeiste elektromagnetische Energie den von der Antennenbox definierten Untersuchungsraum nicht verlassen kann.

Die Erfindung hat überraschend erkannt, dass es äußerst vorteilhaft ist, durch die Dipol-Antennenstruktur einen höherer Wellentyp, nämlich den H20-Wellentyp und nicht wie sonst bei solchen Antennenstrukturen üblich, den H10-Wellentyp im Hohlleiter anzuregen, da dadurch die längenbezogene Dämpfung zum offenen Ende der Antennenbox hin außergewöhnlich rasch ansteigt, was eine verhältnismäßig flache Bauweise der Antennenbox, bei der die Höhe der Seitenwände etwa im Bereich von deren Abstand liegt, erst ermöglicht.

Die H10- und H20-Wellentypen werden in der Literatur teilweise auch als H10- bzw. H20-Mode oder als TE10- bzw. TE20 Mode bezeichnet.

Es hat sich folgender Zusammenhand zwischen Seitenwandabstand, Wellentyp, Grenzfrequenz (worauf nachfolgend noch eingegangen wird) und Effekt bei Verwendung von mit 868 MHz arbeitenden Funketiketten gezeigt:

| Seitenwandabstand | Wellentyp | Grenzfrequenz | Effekt bei 868 MHz |
|---|---|---|---|
| 25 cm | H10 | 600 MHz | keine Dämpfung |
| 20 cm | H10 | 750 MHz | keine Dämpfung |
| 15 cm | H10 | 1000 MHz | Dämpfung |

| | | | |
|---|---|---|---|
| 25 cm | H20 | 1200 MHz | starke Dämpfung |
| 20 cm | H20 | 1500 MHz | außerordentlich starke Dämpfung |
| 15 cm | H20 | 2000 MHz | völlige Blockade |

Da erfindungsgemäß durch einen Dipol angeregt, dessen offene Enden zu den Seitenwänden hin zeigen, wird der H20-Wellentyp erzeugt. Die Dämpfung erfolgt durch Verluste, die durch Wandströme verursacht werden.

Weitere Einzelheiten und Vorteile der Erfindung ergeben sich aus der nachfolgenden rein beispielhaften und nicht-beschränkenden Beschreibung von Ausführungsbeispielen in Verbindung mit der zehn Figuren umfassenden Zeichnung.

### KURZE BESCHREIBUNG DER ZEICHNUNG

- Fig. 1: zeigt stark schematisiert ein RFID-Lesegerät gemäß Stand der Technik.
- Fig. 2: zeigt schematisch einen Schnitt durch ein erstes Ausführungsbeispiel einer erfindungsgemäßen Antennenbox für ein RFID-Lesegerät.
- Fig. 3: zeigt schematisch einen Schnitt durch ein zweites Ausführungsbeispiel einer erfindungsgemäßen Antennenbox für ein RFID-Lesegerät.
- Fig. 4: zeigt in schematischer Perspektivansicht ein Ausführungsbeispiel eines Gehäuses zur Bildung einer erfindungsgemäßen Antennenbox.
- Fig. 5: zeigt schematisch in Draufsicht eine Ausführungsform einer betriebsbereiten Antennenbox mit einem Antennenmodul.
- Fig. 6: zeigt in schematischer Perspektivansicht ein autarkes RFIDLesegerät mit einer erfindungsgemäßen Antennenbox.
- Fig. 7: zeigt schematisch in Draufsicht beispielhaft eine Ausführungsform einer Antennenbox mit einem Antennenmodul gemäß einer weiteren Ausführungsform mit speziellem Verlauf einer planaren Speiseleitung und einer am Gehäuse befestigten koaxialen Durchführungsbuchse zum Anschluss an ein RFID-Lesegerät gemäß Fig. 6.
- Fig. 8: zeigt schematisch in Seitenansicht die Details der Verbindungen zum Aufbau eines autarken RFID-Lesegeräts.
- Fig. 9: zeigt schematisch ein Ausführungsbeispiel eines Abstandshalters.
- Fig. 10: zeigt schematisch ein Ausführungsbeispiel eines auf einer Labortischplatte befindlichen RFID-Lesegeräts mit Roboterarm.

### DETAILLIERTE BESCHREIBUNG VON AUSFÜHRUNGSFORMEN DER ERFINDUNG

Die Wellenausbreitung in Rechteckhohlleitern ist dem Fachmann bekannt. Ebenso sind die verschiedenen in Hohlleitern ausbreitungsfähigen sogenannte Moden oder Wellentypen bekannt, die jeweils unterschiedliche Feldstrukturen aufweisen. Zur Wellenausbreitung ist es zwingend erforderlich, dass die jeweiligen Randbedingungen für die elektromagnetischen Felder erfüllt sind. So muss beispielsweise die elektrische Feldstärke an den metallischen Rändern verschwinden, damit die zu transportierende Welle nicht bedämpft wird. Da die Feldstruktur einer elektromagnetischen Welle naturgemäß frequenzabhängig ist, ändert sich diese Feldstruktur mit veränderlicher Frequenz so, dass je nach Frequenz die jeweiligen, durch die Geometrie vorgegebenen Randbedingungen erfüllt werden und somit die jeweils unterschiedlichen Moden ausbreitungsfähig werden. Es bilden sich Grenzfrequenzen aus. Der Hohlleiter wirkt in elektrischer Hinsicht wie ein Hochpassfilter. Mit zunehmender Betriebsfrequenz sind bei unveränderten geometrischen Abmessungen in der Regel auch höhere Wellentypen ausbreitungsfähig. Da es sich bei typischen Hohlleitern um sogenannte einfach berandete Wellenleiter handelt, also beispielsweise beim Rechteckhohlleiter im Querschnitt betrachtet zeigt sich nur ein einziger vollständig metallisierten Rand, ist es beispielsweise unmöglich, ihn alleine zum Transport eines Gleichstromes zu verwenden, um beispielsweise eine Taschenlampe mit Hilfe einer Batterie zu betreiben. Es gibt nur einen einzigen metallischen Pol, nämlich den Randmantel des Rechteckhohlleiters in seiner Gesamtheit. Zum Transport eines Gleichstromes jedoch benötigt man zwei voneinander getrennte metallische Leitungen - eine, die mit dem Pluspol der Batterie verbunden ist und eine die mit dem Minuspol der Batterie verbunden ist. Am Ende der Leitung wird dann der Verbraucher beispielsweise in Form einer Glühlampe angeschlossen, die dann beim Herstellen eines Kontaktes zu leuchten beginnt. Würde man an die beiden Pole einer Batterie einen Rechteckhohlleiter anschließen, so würde er die Batterie lediglich kurzschließen. Eine am Ende des Hohlleiters angeschlossenen Glühlampe würde keinesfalls leuchten.

Der Gleichstrom der Batterie hat eine zu niedrige Frequenz. Es gibt für Gleichstrom in einem Rechteckhohlleiter keinen ausbreitungsfähigen Mode.

Erhöht man jedoch die Frequenz des elektromagnetischen Generators und verwendet man anstelle einer galvanischen Batterie beispielsweise eine elektromagnetischen Generator mit einer Frequenz im Bereich von 600 THz, also beispielsweise dem Licht einer Taschenlampe, so kann man auf der einen Seite eines geraden Rechteckhohlleiters hinein leuchten und es kommt auf der anderen Seite des Hohlleiters das Licht der Taschenlampe wieder ungedämpft heraus. Dieses physikalische Phänomen, nämlich, das jede der Hohlleitermoden eine frequenzabhängige untere Grenzfrequenz besitzt, und elektromagnetische Energie mit einer Frequenz unterhalb dieser Grenzfrequenz durch die metallische Berandung kurzgeschlossen und dadurch mehr oder weniger stark bedämpft wird, kann verwendet werden, um elektromagnetische Felder abzuschirmen, aber kleine Gegenstände durch eine verbleibende Öffnung hindurch zu lassen. Dieses Phänomen ist dem Fachmann bekannt und wird beispielsweise in der Druckschrift US 2006/0170556 A1 beschrieben, um Transponder auf Paketen in einem röhrenförmigen Tunnel, in dem sich die Lesegeräte für die auf den Paketen befestigten Transponder befinden und durch den die Pakete beispielsweise mit Hilfe eines Fließbandes hindurch transportiert werden, auszulesen. Dabei sind die jeweiligen Öffnungen des Tunnels so dimensioniert, dass die innerhalb des Tunnels durch die Lesegeräte erzeugten elektromagnetischen Felder nicht durch die Tunnelöffnungen hindurch treten können, weil deren geometrischen Abmessungen so gering sind, dass die elektromagnetischen Felder wegen der sich aus den Abmessungen ergebenden erforderlichen aber nicht erreichten hohen Grenzfrequenz, den Tunnel nicht verlassen können und somit das Personal in der Nähe des Tunnels nicht mit der elektromagnetischen Energie der Lesegeräte belastet wird.

Zum besseren Verständnis der physikalischen Vorgänge werden nachfolgend zunächst einfache Antennenboxen aus Metallplatten im Zusammenhang mit RFID-Lesegeräten betrachtet:
Bei einer Ausführungsform der Erfindung ist die Antennenbox zur Formung des Nahfeldes eines RFID-Lesegerätes für Funketiketten als Hohlleiter ausgebildet, dessen niedrigste Cut-Off-Frequenz etwa um das 1,5-fache oder mehr höher ist, als die zum Betrieb der Funketiketten erforderliche Betriebsfrequenz, wobei der der Hohlleiter an seinem einen Ende durch eine metallisch leitende Wand verschlossen ist, so dass er einen Boden der Antennenbox bildet, und an seinem anderen Ende offen ist, wobei die Gesamtlänge des Hohlleiters mindestens ein Viertel bis ein Drittel der Wellenlänge der zum Betrieb der Funketiketten erforderlichen elektromagnetischen Wellen beträgt. Damit wird es überraschend möglich, dass von einer Antenne eines Lesegerätes abgestrahlte Feld quasi einzusperren und auf einen definierten Raumbereich zu begrenzen, in den dann auszulesende oder zu beschreibende Funketikette, bzw. die mit solchen Modulen markierten Gegenstände, eingebracht werden können.

Bei einer Ausführungsform ist die Antennenbox als zumindest einseitig metallisch verschlossener Rechteckhohlleiter mit mehreren Seitenwänden ausgebildet, wobei die Antennenbox dann z.B. aus einem starren quaderförmigen Gehäuse aus sterilisierbarem Gehäusematerial bestehen kann, welches zu wenigstens einer Seite, vorzugsweise zu zwei Seiten hin zumindest partiell offen ist.

Bei einer weiteren Ausführungsform besitzt der Hohlleiter einen Boden und Seitenwände, die bezüglich des Bodens jeweils nach außen hin schwenkbar sind, wodurch sich das offene Ende des Hohlleiters erweitert und sich gleichzeitig die elektrisch wirksame Gesamtlänge des Hohlleiters verkürzt.

Besitzt die Antennenbox eine oder mehrere Seitenwände, so können diese und der Boden entweder selbst metallisch leitend oder mit einer metallisch leitenden Folie versehen sein, so dass sie eine Seitenwandschirmung und eine Bodenschirmung bilden. Eine entsprechende Folie kann eine selbstklebende Folie mit einer Dicke im Bereich von etwa 0,2 bis 0,8 mm, vorzugsweise etwa 0,4 bis 0, 6 mm sein.

Bei einer bevorzugten Ausführungsform besitzt die Seitenwand oder eine der Seitenwände eine zum offenen Ende des Hohlleiters hin offene Aussparung, was das Einbringen von Funketiketten in den Innenraum der Antennenbox erleichtert, so dass z.B. an einem Packtisch schnell und effizient einzelne Instrumente erfasst werden können, wenn die Antennenbox Teil eines RFID-Lesegerätes ist.

Ein RFID-Lesegerät zum Erfassen von mit Funketiketten markierten Gegenständen umfasst typischerweise ein Antennenmodul mit einer resonanten Antennenstruktur zum Auslesen entsprechender Funketiketten, wobei das Antennenmodul im Bereich des Bodens einer erfindungsgemäßen Antennenbox so angeordnet ist, dass seine resonante Antennenstruktur zum offenen Ende des Hohlleiters hin abstrahlt. Der Hohlleiter der Antennenbox erlaubt es dann vorteilhaft, dass Feld des Antennenmodul auf einen engen Raumbereich zu begrenzen, so dass nur dort befindliche Funketiketten ausgelesen bzw. beschrieben werden können und in der Nähe befindliche Metallflächen nicht weiter stören.

Bei einer bevorzugten Ausführungsform ist die resonante Antennenstruktur des Antennenmoduls auf einem dielektrischen Trägersubstrat aufgebracht, wodurch sich die geometrische Länge, die die Antennenstruktur zur Abstrahlung des zum Auslesen der Funketiketten benötigten Hochfrequenzfeldes besitzen muss, im Vergleich zur Länge ohne Substrat auf wenigstens etwa die Hälfte verkürzt und dadurch geringer ist als die Breite des Hohlleiters.

Bei einer weiteren bevorzugten Ausführungsform ist das Antennenmodul über eine durch eine Durchführungsöffnung in der Antennenbox geführte Hochfrequenzleitung mit einer Steuer- und Auswerteelektronik verbunden.

Gemäß einem Verfahren zur gezielten Erfassung eines mit einem Funketikett gekennzeichneten Gegenstands unter Verwendung eines erfindungsgemäßen RFID-Lesegeräts wird zumindest der Teil des Gegenstands, der das Funketikett trägt, in das Innere des Hohlleiters verbracht, um die in dem Funketikett abgespeicherten Daten störungsfrei und ohne Beeinflussung durch etwaig in der Umgebung außerhalb des Hohlleiters vorhandene weitere Funketiketten auszulesen bzw. das Modul zu beschreiben.

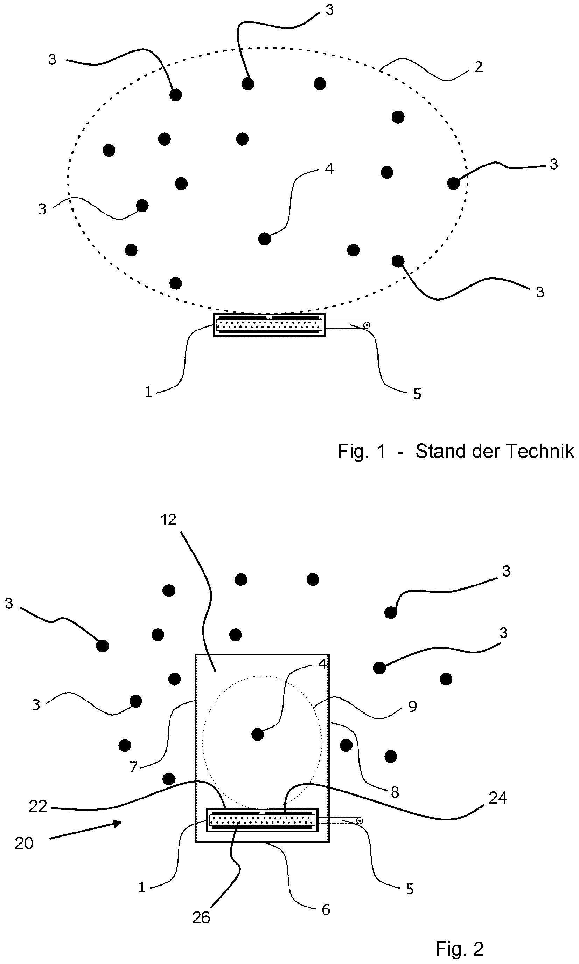

Bei dem in Figur 1 gezeigten Stand der Technik dient ein Antennenmodul 1 der Erzeugung eines möglichst ausgedehnten elektromagnetischen Feldbereiches 2.

Die sich in dem Feldbereich 2 befindenden Funketiketten 3, von denen aus Gründen der Übersichtlichkeit nur einige mit Bezugszeichen versehen wurden, sowie ein speziell zu selektierendes Funketikett 4 beziehen ihre zum Betrieb erforderliche Energie aus diesem Feld und nutzen dieses Feld beispielsweise durch rhythmische Absorptionsmodulation gleichzeitig zur Übertragung der in den Funketiketten abgespeicherten Daten. Die jeweiligen Funketiketten sind an bestimmten Gegenständen befestigt und damit diesen Gegenständen logistisch zugeordnet.

Das Antennenmodul 1 ist durch eine Hochfrequenzleitung 5, in der Regel ein dünnes verlustarmes Koaxialkabel, mit einer an sich bekannten und daher hier nicht weiter gezeigten Steuer- und Auswerteelektronik verbunden, welche das Antennenmodul einerseits speist und andererseits die von den Funketiketten jeweils empfangenen Signale auswertet und verarbeitet.

Die hier gezeigte Anordnung ist typisch für ein UHF-System, welches in Europa im Frequenzbereich von etwa 868 MHz zugelassen ist. Die eigentlich wirksamen Antennen im Antennenmodul 1 sind in der Regel planare metallische Strukturen, die auf einem Trägersubstrat 26 aufgebracht sind. Für diesen Frequenzbereich wird üblicherweise ein FR-4-Substrat verwendet, welches in diesem Frequenzbereich noch sehr gut zu gebrauchen ist. Die Antennen werden ähnlich der Microstrip-Technik gestaltet, d. h. das verwendete Antennenmodul besitzt ein Trägersubstrat 26, bodenseitig eine durchgehend metallisierte Grundplatte und eine geeignet strukturierte Oberseite mit den stets resonanten Antennenstrukturen 30. Dies können einfache Dipole, Kreuzdipole oder sogenannte Patch-Antennen sein. Durch solche Antennenstrukturen werden die erzeugten elektromagnetischen Felder 2, wie in Fig. 1 gezeigt, von der Grundplatte des Substrates entgegengesetzt fort nach oben hin abgestrahlt. Dort wird also ein Feldbereich 2 erzeugt, dessen Intensität mit zunehmender Entfernung in der Regel quadratisch abnimmt.

Der in Fig. 1 gestrichelt eingezeichnete Feldbereich 2 markiert den Bereich, bis zu dessen Grenze die jeweiligen Funketiketten 3 noch genügend Betriebsenergie aus dem elektromagnetischen Feld beziehen können. Bei einer größeren Entfernung können die Funketiketten jedoch nicht mehr aktiviert werden, weil dann die Energiedichte des Feldes zu gering ist.

Wie Fig. 1 zu entnehmen ist, kann ein ganzer Pulk von Funketiketten gleichzeitig aktiviert werden. Das ist für eine bestimmte Konstellation wie beispielsweise die Erfassung von mit diesen Funketiketten markierten Werkzeugen in einem Lagerraum durchaus sinnvoll. Je nach Größe der in den Funketiketten verwendeten Antennen können Funketiketten für den 868 MHz-Bereich heutzutage noch in sechs Metern Entfernung problemlos betrieben werden.

Bei der Markierung z.B. von chirurgischen Instrumenten verwendet man typischerweise miniaturisierte Funketiketten und beschränkt sich auf einen Arbeitsbereich von typischerweise weniger als einem Meter. Trotzdem ergibt sich die oben geschilderte Problematik, wenn beispielsweise nur ein einziges zu selektierendes Funketikett 4 innerhalb eines Pulks von Funketiketten 3 gezielt ausgelesen werden soll, ohne dabei von weiteren Funketiketten 3 im Pulk gestört zu werden.

Eine Lösung des Problems ist schematisch in Fig. 2 gezeigt. Das Antennenmodul 1 wird von einer Antennenbox aus geeignetem Material partiell umschlossen, wodurch nun im Betrieb des Antennenmoduls 1 ein modifizierter Feldbereich 9 entsteht. In Fig. 2 ist zur Erläuterung lediglich eine Querschnittszeichnung dargestellt. Dabei sieht man, wie das Antennenmodul 1 von einem Boden 6, einer linken Seitenwand 7 und einer rechten Seitenwand 8 einer Antennenbox gemäß einem ersten Ausführungsbeispiel umschlossen ist. Bei diesem Ausführungsbeispiel besitzt die Antennenbox auch eine Vorderwand, die hier nicht gezeigt ist, und eine Rückwand 12. Das Antennenmodul ist wiederum, wie im übrigen auch bei den nachfolgend beschriebenen Ausführungsformen, über eine Hochfrequenzleitung 5 mit einer Steuer- und Auswerteelektronik verbunden, welche das Antennenmodul einerseits speist und andererseits die von den Funketiketten jeweils empfangenen Signale auswertet und verarbeitet, so dass das Antennenmodul zusammen mit der über die Hochfrequenzleitung 5 angeschlossenen Steuer- und Auswerteelektronik in seiner Gesamtheit und insbesondere mit der so modifizierten Antennenvorrichtung 20 bereits ein erstes RFID-Lesegerät bildet, welches Funketiketten prinzipiell einzeln und gezielt untersuchen kann.

Das Material für die Wände der Antennenbox ist metallisch leitend, wirkt aber aber im UHF-Bereich auch dämpfend. Dabei sind verschiedene Realisierungen zur Feldformung möglich. Kupferplatten sind wegen zu hoher Leitfähigkeit eher ungeeignet, weil dadurch zu viele Interferenzen entstehen können. Ein leifähiger Lack mit Silberpartikeln oder ein schlecht leitendes Graphitspray ergeben in der Regel zu dünnen Schichten, die durch seitliche Wirbelstrombildung vom intensiven UHF-Feld im Nahbereich des Antennenmoduls durchdrungen werden können. Bewährt hat sich bei einem der getesteten Ausführungsbeispiele eine selbstklebende, etwa 0,4 mm dünne Folie aus gekapseltem bleihaltigem Material, die auf geeignetes Trägermaterial aufgeklebt worden ist. Es sind jedoch auch weitere Metallfolien oder andere metallisch leitende und gleichzeitig verlustbehaftete und somit im UHF-Frequenzbereich dämpfend wirkende Materialien einsetzbar.

Gerade in medizinisch steriler Arbeitsumgebung muss ein Kompromiss zwischen den Materialkosten und den medizinischen Erfordernissen gefunden werden. Somit kann dieses zur Abschirmung verwendete Material je nach den jeweiligen Erfordernissen unterschiedlich sein, sofern die elektrische Leitfähigkeit, die Dämpfung der elektromagnetischen Felder im verwendeten Frequenzbereich und die Materialdicke für den jeweiligen Anwendungsfall optimiert werden.

In der Fig. 2 ist schematisch gezeigt, wie ein zu selektierendes Funketikett 4 mit Hilfe der Antennenbox einzeln aktiviert werden kann, indem es in einen modifizierten Feldbereich 9 mit einer zum Betrieb des selektierten Funketiketts hinreichender Feldenergie verbracht wird, während alle anderen Funketiketten 3 aufgrund zu geringer Feldenergie außerhalb des modifizierten Feldbereichs 9 deaktiviert bleiben.

Fig. 2 zeigt ferner den grundsätzlichen Aufbau des Antennenmoduls 1, bei dem die linksseitige Dipolmetallisierung 22 und rechtsseitige Dipolmetallisierung 24 eines Dipols auf einem Trägersubstrat 26 angeordnet sind und so eine resonante Antennenstruktur bilden.

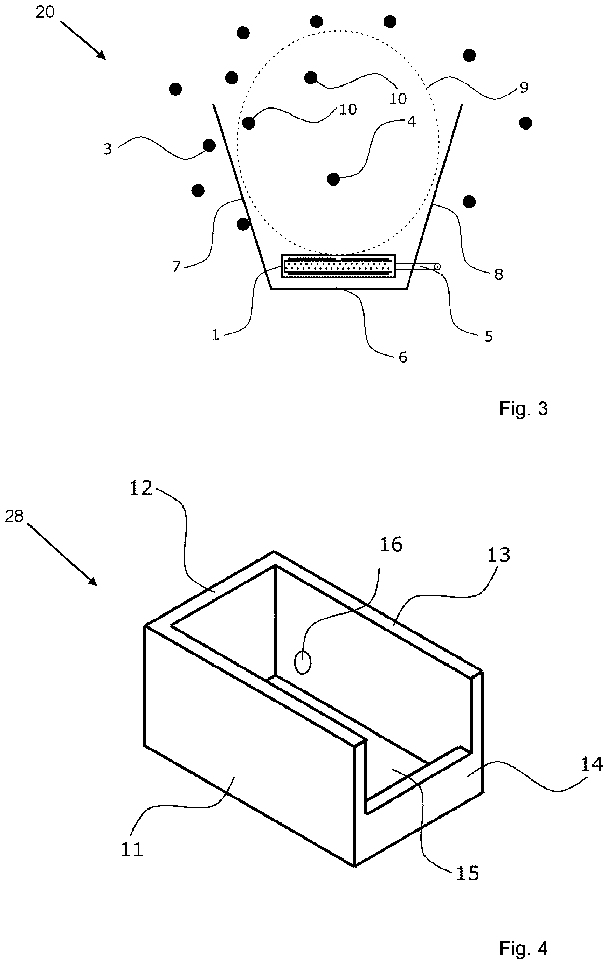

Durch eine einfache Variation des Winkels zwischen dem Boden 6 und den Seitenwänden 7 und 8 kann die Form des Bereiches mit hinreichend hoher Feldenergie den jeweiligen Bedürfnissen angepasst werden. Die Fig. 3 zeigt schematisch als Querschnittszeichnung eine solche Variation, die ein zweites Ausführungsbeispiel einer modifizierte Antennenvorrichtung 20 bildet. Die linke Seitenwand 7 und die rechte Seitenwand 8 stehen in dieser Variation nicht in einem Winkel von 90 Grad zum Boden der Blende, sondern in einem Winkel von jeweils etwa 110 Grad. Dadurch wird der modifizierte Feldbereich 9 signifikant vergrößert, wodurch in diesem zur Erläuterung dienenden Figur zwei zusätzlich selektierte Funketiketten 10 aktiviert werden können.

Grundsätzlich kann die Antennenbox zur Formung des Nahfeldes von RFID-Lesegeräten variabel gestaltet werden. Es muss dazu lediglich eine Art fixierbare Scharniervorrichtung zwischen dem Boden 6 und den jeweiligen Seitenwänden 7 und 8 angebracht werden. Dadurch kann der erfindungsgemäß modifizierte Feldbereich den jeweiligen Erfordernissen individuell angepasst werden.

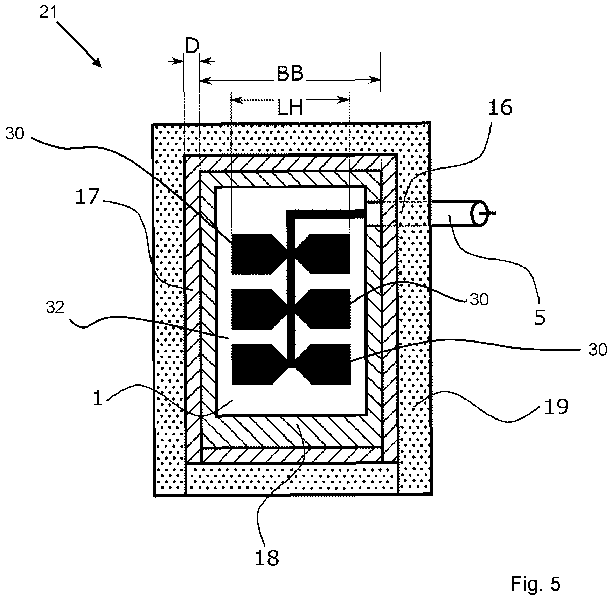

Fig. 4 zeigt schematisch ein Ausführungsbeispiel für ein sterilisierbares leeres Gehäuse 28 zur Ausbildung einer Antennenbox mit parallel verlaufenden Wänden. Das Gehäuse 28 besteht bei diesem Ausführungsbeispiel aus einem sterilisierbaren Material, welches leichtgewichtig aber mit hinreichender Steifigkeit versehen ist. Das Gehäuse 28 bildet das äußere Skelett für die eigentliche Antennenbox. Daher sind bis auf die beiden Vorgaben, nämlich Steifigkeit und Sterilisierbarkeit, keine weiteren Bedingungen für die Funktion der Antennenbox zwingend erforderlich. Insbesondere ist es gleichgültig, ob das Gehäuse aus geeignetem Kunststoff oder beispielsweise aus Edelstahl gefertigt ist, da die charakteristischen elektrischen Eigenschaften durch die im Zusammenhang mit Fig. 5 erläuterten zusätzlichen Komponenten festgelegt werden. Für einfache Zwecke wäre aber bereits ein entsprechendes einfaches Gehäuse aus Edelstahl bereits ausreichend.

Das in Fig. 4 gezeigte Gehäuse besitzt eine linke Gehäusewand 11, eine Gehäuserückseite 12, eine rechte Gehäusewand 13 eine Gehäusevorderseite 14 und einen Gehäuseboden 15. Das Gehäuse ist quaderförmig und nach oben hin offen, d. h. es besitzt keinen Deckel. Zudem ist die Gehäusevorderseite 14 signifikant niedriger, als die anderen Gehäusewände, wodurch das Einbringen von zu untersuchenden Gegenständen, die mit Funketiketten markiert worden sind, erheblich erleichtert wird.

Bei einem Ausführungsbeispiel für den UHF- Bereich sind die Gehäusewände 11 und 13 sowie die Gehäuserückseite 12 jeweils etwa 12 cm hoch. Die Gehäuserückseite 12 und die Gehäusevorderseite 14 sind etwa 15 cm breit, wobei die Gehäusevorderseite 14 lediglich etwa 5 cm hoch ist. Die äußere Gesamtlänge des Gehäuses beträgt etwa 24 cm. Zur Durchführung der Hochfrequenzleitung 5 ist eine Durchführungsöffnung 16 vorgesehen, damit ein später in das Gehäuse 28 eingebrachtes Antennenmodul 1 von der Steuer- und Auswerteelektronik gespeist werden kann.

Zur Vervollständigung der Antennenbox zur Formung des Nahfeldes von RFID-Lesegeräten sind nun weitere Komponenten nötig, wie sie in Fig. 5 dargestellt sind. Zunächst wird das Gehäuse an den jeweiligen Innenseiten der Gehäusewände mit einem geeigneten Material ausgekleidet.

Während das Gehäusematerial 19 in elektrischer Hinsicht zunächst nebensächlich ist und lediglich die Bedingungen hinreichender Steifigkeit und im Falle der Anwendung in medizinischer Umgebung die Bedingung der Sterilisierbarkeit erfüllen muss, so kommt dem Material für die Schirmung eine in elektrischer Hinsicht signifikantere Bedeutung zu.

Bei dem hier vorgestellten Ausführungsbeispiel ist eine selbstklebende 0,4 mm dicke bleihaltige Folie verwendet worden, wobei das Blei so gekapselt ist, dass es nicht freiliegt und keine Gesundheitsschäden beispielsweise durch Kontakt mit der Haut hervorrufen kann. Es können aber auch andere Materialien verwendet werden. Im UHF-Frequenzbereich bewirken die metallischen Eigenschaften des Bleis wegen der elektrischen Leitfähigkeit einen Kurzschluss der elektrischen Felder. Andererseits ist die Leitfähigkeit im UHF-Bereich jedoch deutlich geringer, als es bei Kupfer oder bei Silber der Fall ist, wodurch störende Reflexionen an den jeweiligen Wänden durch die gleichzeitig auftretenden elektrischen Verluste bedämpft werden. Mit dieser Folie werden sämtliche Seitenwände in der jeweiligen Höhe der Wände vollständig beklebt und bilden dadurch die Seitenwandschirmung 17. Ein Bekleben des Gehäusebodens 15 führt zur Bodenschirmung 18.

Normalerweise ist die Antennenstruktur 30 durch das jeweilige Gehäuse des Antennenmoduls 1 verdeckt. Um die elektrischen Verhältnisse zu erläutern, wird die Oberseite des Antennenmoduls 1 in Fig. 5 als transparent angenommen, sodass die strukturierte Oberfläche der wirksamen Antennen direkt betrachtet werden kann. Die Antennenstruktur 30 wird bei diesem Ausführungsbeispiel von drei zu einer Strahleranordnung miteinander verschalteter Dipole gebildet, die auf einer Trägersubstratoberfläche 32 angeordnet sind. In diesem hier beispielhaft schematisch dargestellten Fall handelt es sich bei der Antennenstruktur 30 um miteinander verkoppelte Dipolantennen, einem sogenannten Antennen-Array. Diese einzelnen Dipolantennen werden stets resonant betrieben, damit sie wirkungsvoll funktionieren können. Die Gesamtlänge LH der jeweiligen Dipole in der Antennenstruktur 30 entspricht in der elektrischen Wirksamkeit stets einer halben Wellenlänge bei der jeweiligen Betriebsfrequenz. Für eine Betriebsfrequenz im UHF-Bereich von 868 MHz kann also die Wellenlänge exakt berechnet werden. Jedoch ist die elektrisch wirksame Wellenlänge signifikant von dem jeweiligen Medium abhängig, mit dem die Dipolfelder verknüpft sind.

In dem in Fig. 5 beispielhaft erläuterten Fall befinden sich die in Figur 5 gezeigten resonanten Dipole in der Antennenstruktur 30 des Antennenmoduls auf einem FR-4 Material als Trägersubstrat. Dadurch verkürzt sich die geometrische oder auch mechanische Länge der Metallisierung jedes auf der Trägersubstratoberfläche 32 befindlichen Dipols, also sowohl die linksseitige Dipolmetallisierung 22 als auch die rechtsseitige Dipolmetallisierung 24 mit der Quadratwurzel der Permittivitätszahl des jeweils verwendeten Substrates, also bei FR4 Substrat, je nach Hersteller unterschiedlich, aber wenigstens um 100 %. Bei genauerer Rechnung müssten die jeweilige Breite der streifenförmigen Dipolmetallisierungen und die Verkopplung der Dipole miteinander sowie die sich am Ende der Dipolstreifen sich ergebenden sogenannten kapazitiven Endeffekte aufgrund der lokalen Streufelder zusätzlich berücksichtigt werden. An dieser Stelle sei zur Vereinfachung der Abschätzung in Form einer näherungsweisen Betrachtung lediglich erwähnt, dass ein auf einem FR-4-Substrat angebrachter Dipol mechanisch etwa nur halb so lang ist, als wenn er sich ausschließlich in der Luft befinden würde.

Die einer Frequenz von 868 MHz in der Luft zugeordnete Wellenlänge beträgt etwa 35 cm. Die einer Frequenz von 868 MHz in einem FR-4-Substrat zugeordnete halbe Wellenlänge beträgt etwa 8,6 cm. Dies ist die für den Dipol in etwa erforderliche Länge und entspricht näherungsweise der mindestens erforderlichen Breite des Antennenmoduls. Bei einer Wandstärke von etwa 1 cm des Gehäusematerials 19 und einer Dicke D von 0,4 mm pro Seite der Schirmung verbleiben bei einer äußeren Breite des Gehäuses von 15 cm somit weniger als etwa 13 cm an Blendenbreite BB. Dadurch ergibt sich die folgende Situation: Die jeweiligen Seitenwände, insbesondere die linke Gehäusewand 11 und die rechte Gehäusewand 13 wirken zusammen mit den jeweiligen Seitenwandschirmungen 17 wie die Innenwände eines Rechteckhohlleiters. Durch die in Fig. 5 gezeigte Ausrichtung der resonanten Dipole ist die Feldstruktur in diesem so gebildeten Rechteckhohlleiter schaltungstechnisch vorgegeben. Dadurch bestimmt die Blendenbreite BB das charakteristische elektrische Verhalten der in ihr befindlichen elektromagnetischen Energie.

Da das RFID-Lesegerät für in medizinischen Instrumenten integrierten Funketiketten als möglichst kompaktes, in medizinischen Räumen verwendbares handliches Tischgerät realisiert werden soll, genügt es nicht, lediglich einen Rechteckhohlleiter als Blende oder Schirmung zu verwenden, dessen Grenzfrequenz über der Betriebsfrequenz der verwendeten Funketiketten liegt und somit das Feld bedämpft. Das Maß der Dämpfung würde nicht rasch genug entlang der Ausdehnung des Hohlleiters erfolgen. Funketiketten, die eine Reichweite von bis zu 6 Metern haben können, kann man nicht in einem einfach gedämpften Hohlleiter-Feld untersuchen. Dazu müsste man die Öffnung soweit verringern, dass kaum noch medizinische Geräte zur Untersuchung in die Untersuchungskammer 21 eingeführt werden können. Alternativ müsste bei einem ausreichenden Querschnitt, der ein bequemes Einführen von medizinischen Instrumenten und den daran befestigten Funketiketten ermöglicht, die von einer Antennenbox gebildete Untersuchungskammer bis zu einem halben Meter hoch verlängert werden, um eine ausreichende Dämpfung des von den Lesegeräten erzeugten Feldes zu bewirken. Dies wäre so unhandlich, dass sich diese Lösung nur schwer in die Praxis umsetzen lässt.

Eine manuelle oder elektronische Reduzierung der Sendeleistung der RFID-Lesegeräte wäre prinzipiell denkbar, führte aber zu wenig vergleichbaren Ergebnissen, weil das elektromagnetische Feld in der Untersuchungskammer stark inhomogen wäre und sich die Feldstruktur mit variierender Hochfrequenzleistung lokal stark ändern kann. So bekommt man bei der Überprüfung womöglich unterschiedliche Ergebnisse, je nachdem, an welcher Stelle sich das Funketikett in der Untersuchungskammer gerade befindet. Wird beispielsweise ein und dasselbe Skalpell mit seinem Funketikett einmal mehr und einmal weniger tief bei gleicher Höhe in die Untersuchungskammer eingeführt, so erhält man aufgrund von leistungsabhängigen Feldverzerrungen womöglich deutlich unterschiedliche Werte, wenn man die Degradation des Funketiketts, also dessen alterungsbedingtes Nachlassen der Sendeleistung, messen möchte, und nicht bloß gespeicherte Informationen auslesen will, obwohl es keinen Unterschied gibt. Außerdem wird durch einen zusätzlichen elektronischen Einstellvorgang oder gar durch manuelles Einstellen mit Hilfe eines Drehreglers der Inspektionsvorgang verzögert und ist zudem auch nicht mehr sicher gegenüber möglichen Manipulationen. Eine fixe Zuordnung von Feldstärke und Entfernung von der Antennenstruktur 30 wäre dann das anzustrebende Optimum.

Soll eine hinreichend starke Dämpfung des Speisefeldes für die Funketiketten an den medizinischen Instrumenten bereits bei kurzen Längen von wenigen Zentimetern des von den metallischen Seitenwandschirmung 17 gebildeten Rechteckhohlleiters erfolgen, obwohl die seitlichen Abmessungen groß genug sein müssen, damit auch größere medizinische Instrumente noch in die Antennenbox eingebracht werden können, so bedarf es der nachfolgend beschriebenen Lösung.

Die Antennenstruktur 30 des Antennenmoduls 1 wird so gestaltet und angeordnet, dass die H10 Grundwelle des Rechteckhohlleiters mit ihrer niedrigeren Grenzfrequenz nicht angeregt wird, sondern es wird die H20-Welle mit ihrer doppelt so hohen Grenzfrequenz mit Hilfe der Antennenstruktur 30 angeregt. Die Dispersionskurven zeigen einen exponentiell zunehmenden Dämpfungsverlauf. Dies bedeutet, dass die Dämpfung des Feldes in Abhängigkeit von der Entfernung zur Antennenstruktur 30 nicht lediglich doppelt so hoch ist, sondern exponentiell mit zunehmendem Abstand H ansteigt. Somit führt dies bei gleichen geometrischen Abmessungen der Untersuchungskammer zu einem extrem gedämpften Verlauf der Feldstärke in Abhängigkeit vom Abstand H von der Antennenstruktur.

Die H20-Welle wird durch die hier erfindungsgemäß im Zusammenhang mit der gesetzten Aufgabenstellung gezielt verwendeten Antennenstruktur 30 explizit angeregt, weil die in der Figur 5 erkennbare Dipolstruktur an ihren offenen, also leerlaufenden Enden jeweils ein Spannungsmaximum aufweist.

Andererseits jedoch erfordern die Randbedingungen im Hohlleiter an den jeweils äußeren Wänden ein Spannungsminimum. Dazu müsste die Blendenbreite BB im betrachteten Frequenzbereich aber mindestens 35 cm weit sein. Sie ist jedoch lediglich typerweise etwa 10 bis 16 cm, also noch nicht einmal halb so breit. Das Antennenmodul befindet sich somit elektrisch und physikalisch innerhalb metallisch leitender Wände begrenzten Hohlleiteranordnung, welche sich bei einem Frequenzbereich von 868 MHz weit unterhalb ihrer Cut-off-Frequenz des H20-Wellentyps befindet und somit keine ungedämpfte Ausbreitung des elektromagnetischen Feldes zulässt. Dies bedeutet, dass die resonante Dipolanordnung des Antennenmoduls 1 zwar mechanisch in die Antennenbox eingebracht werden kann und auch dort innerhalb der Antennenbox ein lokales elektromagnetisches Nahfeld zur Speisung und zum Auslesen von Funketiketten erzeugen kann, jedoch kann sich dieses elektromagnetische Feld nicht an den Seitenwänden entlang nach außen hin ausbreiten. Es ist vorteilhaft quasi im Innenraum der Antennenbox eingesperrt, und die entsprechend modifizierte Antennenvorrichtung 20 erfasst zuverlässig nur Funketikette, die in den Innenraum eingebracht werden.

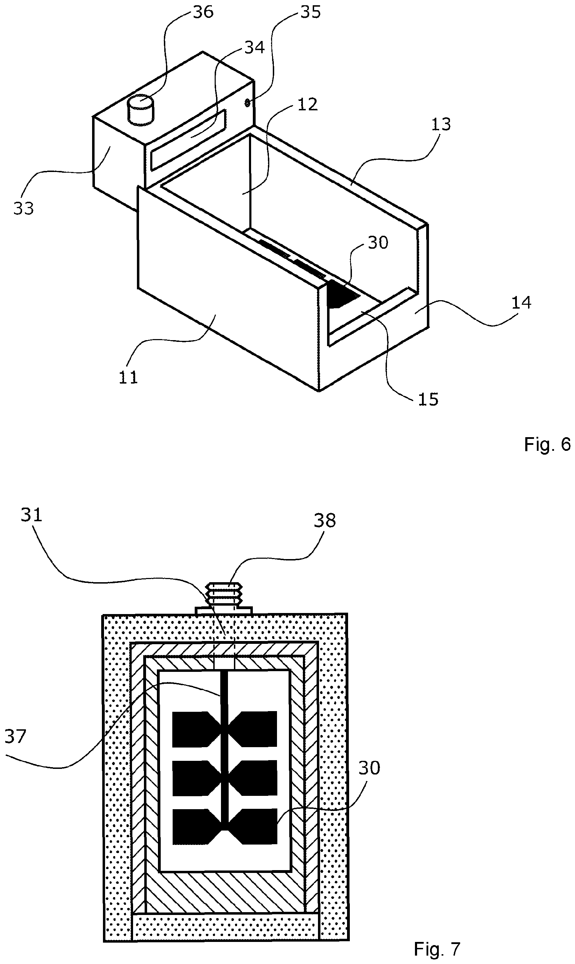

Aufgrund der gewählten Antennenstruktur, die auf der Anregung von einer oder mehrerer miteinander verschalteter Dipole basiert, ergibt sich ein weiterer Vorteil für das hier beschriebene RFID-Lesegerät. Für den vom Abstand H abhängigen Dämpfungsverlauf des elektromagnetischen Feldes in der Untersuchungskammer 21 sind primär lediglich die direkt den offenen Enden der jeweiligen Dipole gegenüberliegenden Seitenwände maßgebend. Dazu wird zur Erläuterung noch einmal die Fig. 2 betrachtet. Dort ist schematisch die rechtsseitige Dipolmetallisierung 24 und die benachbarte rechte Seitenwand zu erkennen. Gleichfalls zu erkennen ist die linksseitige Dipolmetallisierung 22 und die benachbarte linke Seitenwand 7. Der Abstand zwischen den Seitenwänden 7 und 8 bestimmt die Grenzfrequenz für den H20-Wellentyp. Hingegen sind die durch die Gehäuserückseite 12 und durch die Gehäusevorderseite 14 begrenzten Seitenwandschirmungen 17 für die Grenzfrequenz des H20-Wellentyps nicht relevant. Somit können beispielsweise Öffnungen in der Gehäusevorderseite 14 vorgesehen werden, durch die dann auch größere und länglichere medizinische Instrumente problemlos in den Feldbereich der Untersuchungskammer eingeführt werden können. Auch ist deshalb eine Anordnung von mehreren Dipolantennen in der in den Figuren 5 und 7 schematisch erkennbaren Weise möglich, um eine gleichmäßigere Feldverteilung für die Inspektion länglicher medizinischer Instrumente zu erzielen.

Zusätzlich besteht die Möglichkeit, den Verlauf der abstandsabhängigen Feldstruktur zu modifizieren, falls diese für spezielle denkbare Fälle erforderlich sein sollte. Diese Möglichkeit der Modifikation der ortsabhängigen Feldstruktur ist schematisch in Fig. 3 gezeigt.

Durch eine Variation der Wandabstände und durch ein Aufweiten der Wände durch eine Änderung des Winkels zum Gehäuseboden kann, wie bereits oben und im Zusammenhang mit Fig. 3 erwähnt, der modifizierte Feldbereich wunschgemäß gestaltet werden. Im Grenzfall, also bei einem Winkel zwischen dem Gehäuseboden und den Seitenwänden von 180 Grad, ist der elektrische Einfluss auf den modifizierten Frequenzbereich vollständig aufgehoben und der vom Antennenmodul 1 erzeugte Feldbereich verhält sich so, als wäre keine Blende präsent. Allerdings ist der mechanische Aufwand für eine solche variable Antennenbox aufwendig und oftmals auch nicht erforderlich. Der Anwender kann vorteilhaft selbst entscheiden, welche Version einer Antennenbox zur Formung des UHF-Nahfeldes von RFID-Lesegeräten er benötigt.

Während die Variation des Abstandes der Seitenwände eher für Spezialfälle relevant sein könnte, so zeigt hingegen die Fig. 6 in schematischer Perspektivansicht beispielhaft ein komplett montiertes autarkes RFID-Lesegerät mit einer betriebsbereiten Untersuchungskammer 21, mit einer durch die Seitenwandschirmung 17 gebildete Antennenbox und einer Antennenstruktur 30.

Das RFID-Lesegerät 33 ist an der Rückseite der Untersuchungskammer 21 befestigt und mit Hilfe einer Hochfrequenzleitung 40 mit dem Antennenmodul verbunden. Zu erkennen sind das die Untersuchungskammer 21 umschließende Gehäuse 28 mit der linken Gehäusewand 11, der Gehäuserückseite 12, der rechten Gehäusewand 13 und der Gehäusevorderseite 14. Sämtliche Seitenwandschirmungen 17 sind in dieser Figur in den Gehäusewänden integriert, um eine bessere Sterilisierbarkeit zu erhalten. Schematisch angedeutet ist die Antennenstruktur 30, die in der technischen Realisierung ebenfalls mit einer sterilisierbaren Ummantelung versehen ist und hier lediglich zur besseren Orientierung dargestellt wird. Das an der Rückseite der Untersuchungskammer befestigte RFID-Lesegerät 33 besitzt von außen und vorne erkennbar lediglich eine alphanumerische Anzeigevorrichtung 34, und eine Signalleuchte 35. Es kann natürlich auch ein größeres Display vorgesehen sein, um ausgelesene Information und ggf. Bilder einem Benutzer anzuzeigen. Das Gerät ist sterilisierbar. Innerhalb des RFID-Lesegerätes 33 befindet sich zur Bereitstellung der erforderlichen Betriebsenergie ein hermetisch gekapselter Akkumulator oder ein alternativer geeigneter Energiespeicher wie beispielsweise Kondensatoren mit extrem großen Kapazitätswerten. Die Aufladung der Energiespeicher erfolgt kontaktlos induktiv mit Hilfe äußerer Speisefelder, die in bekannter Weise von speziellen Ladestationen erzeugt werden. Das Einschalten des RFID-Lesegerätes 33 erfolgt ebenfalls kontaktlos mit Hilfe eines Schaltmagneten 36, der zu diesem Zwecke in eine Position in der Nähe eines verborgenen Reed-Schaltkontaktes gebracht wird. Zum Ausschalten des RFID-Lesegerätes 33 wird dann der Schaltmagnet einfach an einer anderen Stelle positioniert und der Reed-Kontakt unterbricht daraufhin den Betriebsstromkreis. Eine Signalleuchte 35 ermöglicht auf einfache Weise grundlegende Informationen. Ist beispielsweise das Funketikett eines aktuell inspizierten medizinischen Instrumentes vollkommen in Ordnung, so leuchtet die Signalleuchte 35 grün, ist es defekt, dann leuchtet die Signalleuchte 35 rot und funktioniert das Funketikett zwar prinzipiell, ist aber bereits soweit degradiert, dass es nicht immer zuverlässig gelesen werden kann, so leuchtet die Signalleuchte 35 gelb. Detailliertere Informationen können über die alphanumerische Anzeige 34 ausgegeben werden. Das RFID-Lesegerät 33 besitzt eine interne Prozessoreinheit mit elektronischem Speicher zur Durchführung von Inspektionsprogrammen und ist über interne WiFi-Adapter und Bluetooth-Schnittstellen drahtlos mit der elektronischen Infrastruktur z.B. eines Krankenhauses verbunden und liefert gegebenenfalls die ermittelten Daten dorthin oder empfängt von dort elektronische Anweisungen oder aktuellen Programmcode.

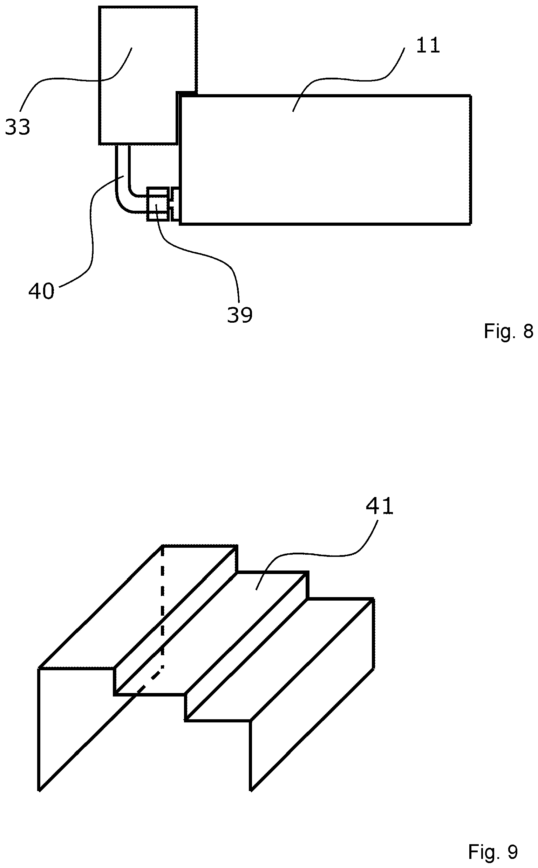

Die Fig. 7 zeigt in der Draufsicht schematisch die bereits in der Fig. 5 gezeigte Antennenstruktur. Unterschiedlich ist lediglich der Verlauf der planaren Speiseleitung für die Antennenstruktur 30. Diese führt nun geradlinig zu einer Durchführungsöffnung in der Rückwand 31 und ist elektrisch leitend mit einer koaxialen Durchführungsbuchse 38 verbunden. Diese wird vorzugsweise als SMA-Buchse realisiert und beispielsweise mit Hilfe kleiner Schrauben fixiert. Die elektrische und mechanische Verbindung von dem RFID-Lesegerät 33 und der Untersuchungskammer 21 wird in der Fig. 8 beispielhaft als eine von vielen Möglichkeiten dargestellt. Durch eine vorstehende Kante des RFID-Lesegerätes 33 ruht das Gewicht auf dem oberen Rand der Gehäuserückseite 12, die in der Darstellung jedoch von der linken Gehäusewand 11 verdeckt wird. Eine starre und stabile koaxiale Hochfrequenzleitung 40, ein sogenanntes Semi-Rigid-Kabel, stellt wird mit Hilfe einer Schraubverbindung 39 die elektrische und mechanische Verbindung beider modularen Einheiten her und bildet dadurch ein autarkes RFID-Lesegerät, das aufgrund ihrer Portabilität an jedem geeigneten freien Platz auf dem Labortisch deponiert werden kann, um die Funketiketten von medizinischen Instrumenten zu überprüfen und zu kontrollieren.

Damit der Abstand H zwischen einem Funketikett und der Antennenstruktur 30 reproduzierbar und schnell vom kontrollierenden Personal hergestellt werden kann, wird ein Abstandshalter als einfaches aber wirkungsvolles Hilfsmittel in die Untersuchungskammer des RFID-Lesegerätes eingebracht.

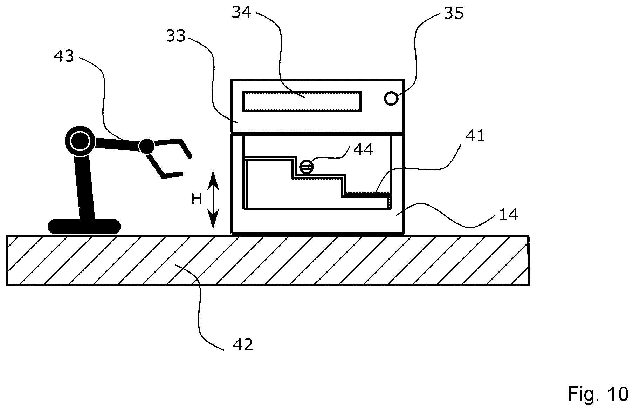

Die Fig. 9 zeigt schematisch und beispielhaft einen Abstandshalter, wie er beispielsweise aus dünnem Plexiglas oder einem anderen nicht elektrisch leitenden Material mit geringer Permittivität hergestellt werden kann. Ein solcher Abstandshalter sollte wenigstens zwei unterschiedliche Entfernungsstufen besitzen und sich nach der einmaligen Formung nicht mehr verändern. Ein thermoplastisches Material eignet sich sehr gut zur Herstellung dieses Abstandshalters. Ein typisches Anwendungsszenario zeigt die Fig. 10.

In Fig. 10 ist schematisch ein Ausführungsbeispiel eines auf einer Labortischplatte 42 befindlichen RFID-Lesegerätes mit eingesetztem Abstandshalter 41 und einem Roboterarm 43 gezeigt. Ein medizinisches Instrument mit integriertem Funketikett 44 befindet in der mittleren Ebene des Abstandshalters in einem aktuell zur Inspektion verwendeten Abstand H. Das medizinische Instrument mit integriertem Funketikett 44 wurde zuvor entweder durch das Personal auf den Abstandshalter gelegt, oder es wurde mit Hilfe des Roboterarms dort positioniert, wobei der Roboterarm drahtlos per WiFi oder per Bluetooth-Anbindung entweder direkt von dem RFID-Lesegerät oder von der elektronischen Infrastruktur des Krankenhauses mit den dort vorhandenen Computern gesteuert werden kann. Sobald alle erforderlichen Daten ermittelt worden sind oder das inspizierte Funketikett eventuell umprogrammiert worden ist, kann das medizinische Instrument mit integriertem Funketikett entweder manuell oder elektronisch automatisiert mit Hilfe des Roboterarms gegen ein weiteres zu untersuchendem Objekt ausgetauscht werden.

### BEZUGSZEICHENLISTE

- 1: Antennenmodul
- 2: Feldbereich
- 3: Funketikett
- 4: zu selektierendes Funketikett
- 5: Hochfrequenzleitung
- 6: Boden
- 7: linke Seitenwand
- 8: rechte Seitenwand
- 9: modifizierter Feldbereich
- 10: zusätzlich selektierte Funketikette
- 11: linke Gehäusewand
- 12: Gehäuserückseite
- 13: rechte Gehäusewand
- 14: Gehäusevorderseite
- 15: Gehäuseboden
- 16: Durchführungsöffnung
- 17: Seitenwandschirmung
- 18: Bodenschirmung
- 19: Gehäusematerial
- 20: modifizierte Antennenvorrichtung
- 21: Untersuchungskammer
- 22: linksseitige Dipolmetallisierung
- 24: rechtsseitige Dipolmetallisierung
- 26: Trägersubstrat
- 28: Gehäuse
- 30: Antennenstruktur
- 31: Durchführungsöffnung in der Rückwand
- 32: Trägersubstratoberfläche
- 33: RFID-Lesegerät
- 34: alphanumerische Anzeigevorrichtung
- 35: Signalleuchte
- 36: Schaltmagnet
- 37: planare Speiseleitung
- 38: koaxiale Durchführungsbuchse
- 39: Schraubverbindung
- 40: starre Hochfrequenzleitung
- 41: Abstandshalter
- 42: Labortischplatte
- 43: Roboterarm
- 44: medizinisches Instrument mit integriertem Funketikett
- BB: Blendenbreite
- D: Dicke der Schirmung
- H: Abstand
- LH: Dipollänge

## Patentansprüche

1. Antennenbox für RFID-Lesegeräte mit wenigstens zwei einander gegenüberliegenden metallisch leitenden Seitenwänden, die durch einen ebensolchen Boden miteinander verbunden sind und dadurch einen zu wenigstens einer Seite hin offenen Rechteckhohlleiter bilden, **dadurch gekennzeichnet, dass**
am Boden der Antennenbox eine Antennenstruktur
in Form eines Dipols oder eines Dipolarrays angeordnet und so ausgerichtet ist, dass sie im Betrieb in der Antennenbox einen H20-Wellentyp anregt.

2. Antennenbox nach Anspruch 1, **dadurch gekennzeichnet, dass** der seitliche Abstand der genannten Seitenwände im Bereich von 10 cm bis 25 cm liegt

3. Antennenbox nach Anspruch 1 oder 2, **dadurch gekennzeichnet, dass** sie vier Seitenwandschirmungen (17) und eine Bodenschirmung (18) besitzt,
- wobei eine linke Gehäusewand (11), eine Gehäuserückseite (12) und eine rechte Gehäusewand (13) jeweils die gleiche Höhe besitzen und
- wobei eine Gehäusevorderseite (14) weniger als ein Drittel der Höhe der zuvor benannten Seitenwände besitzt.

4. Antennenbox nach einem der Ansprüche 1 bis 3, **dadurch gekennzeichnet, dass** sie nach oben hin vollständig offen ist.

5. Antennenbox nach einem der Ansprüche 1 bis 4, **dadurch gekennzeichnet, dass** sich die Antennenstruktur als planare Struktur auf einem dielektrischen Trägersubstrat (26) befindet und für den Frequenzbereich der Betriebsfrequenz auszulesender Funketiketten dimensioniert ist.

6. Antennenbox nach Anspruch 5, **dadurch gekennzeichnet, dass** die auf dem Boden der Antennenbox angeordnete Antennenstruktur (30) aus mindestens einer Dipolantenne mit jeweils einer rechtsseitigen Dipolmetallisierung (24) und jeweils einer linksseitigen Metallisierung (22) besteht, wobei diese so gebildete Dipolantenne in unmittelbarer geometrischer Nähe zur Trägersubstratoberfläche (32), durch die vom angeschlossenen Lesegerät zugeführte elektromagnetische Energie und durch den sich durch die Antennenstruktur (30) ergebenden Schaltungszwang, ein elektromagnetisches Feld mit der Feldstruktur eines H20-Wellentyps innerhalb des durch die seitlichen metallisch leitenden Seitenwände gebildeten Hohlleiters erzwingt.

7. Antennenbox nach Anspruch 6, **dadurch gekennzeichnet, dass** das von der Antennenstruktur (30) erzwungene elektromagnetische Feld so ausgerichtet ist, dass für die Grenzfrequenz für diesen H20-Wellentyp der jeweils seitliche, als Blendenbreite (BB) benannte Abstand einer Seitenwandschirmung (17) maßgeblich ist.

8. Antennenbox nach einem der Ansprüche 1 bis 7, **dadurch gekennzeichnet, dass** sie aus einem starren quaderförmigen Gehäuse aus sterilisierbarem Gehäusematerial (19) gebildet ist, welches zu wenigstens einer Seite, nämlich nach oben hin, vorzugsweise zu zwei Seiten, nämlich nach oben und nach vorne hin, zumindest partiell offen ist.

9. Antennenbox nach einem der Ansprüche 1 bis 8, **dadurch gekennzeichnet, dass** die Seitenwände (11 - 14) und der Boden (6) mit einer metallisch leitenden Folie versehen sind.

10. Antennenbox nach Anspruch 9, **dadurch gekennzeichnet, dass** die metallisch leitende Folie eine selbstklebende Folie mit einer Dicke im Bereich von 0,2 bis 0,8 mm, vorzugsweise 0,4 bis 0, 6 mm ist

11. RFID-Lesegerät mit einer Antennenbox nach einem der Ansprüche 1 bis 10.

## Claims

1. Antenna box for RFID readers with at least two opposing metallically conductive side walls which are connected to one another by a bottom of the same type and which thereby form a rectangular waveguide which is open towards at least one side,
**characterised in that**
an antenna structure in the form of a dipole or a dipole array is arranged at the bottom of the antenna box and is oriented in such a way that it excites during operation an H20 wave type in the antenna box.

2. Antenna box according to claim 1, **characterised in that** the lateral distance between said side walls is in the range of 10 cm to 25 cm.

3. Antenna box according to claim 1 or 2, **characterised in that** it has four side wall shields (17) and a bottom shield (18),
- wherein a left enclosure wall (11), a rear enclosure wall (12) and a right enclosure wall (13) each have the same height, and
- wherein an enclosure housing ront (14) has less than one third of the height of the aforementioned side walls.

4. Antenna box according to one of claims 1 to 3, **characterised in that** it is completely open at the top.

5. Antenna box according to any one of claims 1 to 4, **characterised in that** the antenna structure is located as a planar structure on a dielectric carrier substrate (26) and is dimensioned for the frequency range of the operating frequency of radio tags to be read.

6. Antenna box according to claim 5, **characterized in that** the antenna structure (30) arranged on the bottom of the antenna box consists of at least one dipole antenna having in each case a right-side dipole metallization (24) and in each case a left-side metallization (22), this dipole antenna formed in this way forces - by the electromagnetic energy supplied by the connected reader and by the circuit constraint resulting from the antenna structure (30) - in direct geometric proximity to the carrier substrate surface (32) an electromagnetic field with the field structure of an H20 wave type within the waveguide formed by the lateral metallically conductive side walls.

7. Antenna box according to claim 6, **characterized in that** the electromagnetic field forced by the antenna structure (30) is aligned in such a way that the respective lateral distance, designated as aperture width (BB), of a side wall shield (17) is decisive for the cut-off frequency for this H20 wave type.

8. Antenna box according to one of claims 1 to 7, **characterised in that** it is formed from a rigid cuboid enclosure made of sterilisable enclosure material (19), which is at least partially open towards at least one side, namely towards the top, preferably towards two sides, namely towards the top and towards the front.

9. Antenna box according to one of claims 1 to 8, **characterised in that** the side walls (11 - 14) and the bottom (6) are provided with a metallically conductive foil.

10. Antenna box according to claim 9, **characterised in that** the metallic conductive foil is a self-adhesive foil with a thickness in the range of 0.2 to 0.8 mm, preferably 0.4 to 0.6 mm.

11. RFID reader with an antenna box according to any one of claims 1 to 10.

## Revendications

1. Boîtier d'antenne pour lecteurs RFID, comprenant au moins deux parois latérales métalliquement conductrices opposées qui sont reliées entre elles par un fond de même type et forment ainsi un guide d'onde rectangulaire ouvert vers au moins un côté,
**caractérisé en ce qu'**
une structure d'antenne sous forme d'un dipôle ou d'un réseau dipolaire est disposée sur le fond du boîtier d'antenne et est alignée de manière à ce qu'elle excite un mode H20 en fonctionnement dans le boîtier d'antenne.

2. Boîtier d'antenne selon la revendication 1, **caractérisé en ce que** l'écartement latéral desdites parois latérales est compris entre 10 cm et 25 cm.

3. Boîtier d'antenne selon la revendication 1 ou 2, **caractérisé en ce qu'**il comprend quatre blindages de paroi latérale (17) et un blindage de fond (18),
- dans lequel une paroi de boîtier gauche (11), une face arrière de boîtier (12) et une paroi de boîtier droite (13) présentent chacune la même hauteur et
- dans lequel une face avant de boîtier (14) présente moins d'un tiers de la hauteur des parois latérales susmentionnées.

4. Boîtier d'antenne selon l'une quelconque des revendications 1 à 3, **caractérisé en ce qu'**il est complètement ouvert vers le haut.

5. Boîtier d'antenne selon l'une quelconque des revendications 1 à 4, **caractérisé en ce que** la structure d'antenne en tant que structure plane se trouve sur un substrat porteur diélectrique (26) et est dimensionnée pour la plage de fréquence de la fréquence de fonctionnement d'étiquettes radio à lire.

6. Boîtier d'antenne selon la revendication 5, **caractérisé en ce que** la structure d'antenne (30) disposée sur le fond du boîtier d'antenne est constituée d'au moins une antenne dipôle ayant chacune une métallisation dipôle droite (24) et ayant chacune une métallisation gauche (22), dans lequel ladite antenne dipôle ainsi formée force à proximité géométrique immédiate de la surface de substrat porteur (32), du fait de l'énergie électromagnétique fournie par le lecteur connecté et de la contrainte de commutation résultant de la structure d'antenne (30), un champ électromagnétique avec la structure de champ d'un mode H20 à l'intérieur du guide d'onde formé par les parois latérales métalliquement conductrices latérales.

7. Boîtier d'antenne selon la revendication 6, **caractérisé en ce que** le champ électromagnétique forcé par la structure d'antenne (30) est aligné de telle manière que, pour la fréquence de coupure pour ce mode H20, l'écartement latéral respectif d'un blindage de paroi latérale (17), appelé largeur d'ouverture (BB), est déterminant.

8. Boîtier d'antenne selon l'une quelconque des revendications 1 à 7, **caractérisé en ce qu'**il est constitué d'un boîtier rigide en forme de parallélépipède rectangle en matériau de boîtier stérilisable (19) qui est ouvert, au moins en partie, vers au moins un côté, à savoir vers le haut, de préférence vers les deux côtés, à savoir vers le haut et vers l'avant.

9. Boîtier d'antenne selon l'une quelconque des revendications 1 à 8, **caractérisé en ce que** les parois latérales (11 - 14) et le fond (6) sont munis d'un film métalliquement conducteur.

10. Boîtier d'antenne selon la revendication 9, **caractérisé en ce que** le film métalliquement conducteur est un film autocollant ayant une épaisseur comprise entre 0,2 et 0,8 mm, de préférence entre 0,4 et 0,6 mm.

11. Lecteur RFID comprenant un boîtier d'antenne selon l'une quelconque des revendications 1 à 10.
